# EUROPÄISCHE PATENTSCHRIFT

(11) **EP 2 580 086 B1**
(45) Veröffentlichungstag und Bekanntmachung des Hinweises auf die Patenterteilung: **26.10.2016**
(21) Anmeldenummer: 11725320.3
(22) Anmeldetag: 17.05.2011
(51) Int. Cl.: B60N 2/225

(54) **BESCHLAG FÜR EINEN FAHRZEUGSITZ**
FITTING FOR A VEHICLE SEAT
FERRURE POUR SIÈGE DE VÉHICULE

(30) Priorität: 09.06.2010 DE 102010023966
(43) Veröffentlichungstag der Anmeldung: 17.04.2013
(73) Patentinhaber: Johnson Controls Components GmbH & Co. KG, 67657 Kaiserslautern (DE)
(72) Erfinder: JOKIEL, Christian, 42579 Heiligenhaus (DE); LEHMANN, Ulrich, 53347 Alfter (DE)
(74) Vertreter: Liedtke, Markus
(86) Internationale Anmeldenummer: PCT/EP2011/002423
(87) Internationale Veröffentlichungsnummer: WO 2011/154081

(56) Entgegenhaltungen:
- WO-A1-2010/121758
- DE-C1- 19 548 809

## Beschreibung

Die Erfindung betrifft einen Beschlag für einen Fahrzeugsitz mit den Merkmalen des Oberbegriffs des Anspruches 1.

Ein Beschlag dieser Art ist aus der DE 195 48 809 C1 bekannt. Ohne das dort offenbarte Sperrelement würde es unter dynamischen Betriebsbedingungen, d.h. während der Fahrt, durch Rütteln und Stoßen zu Bewegungen der Keilsegmente kommen, was wiederum zu einer Relativbewegung der Beschlagteile führen könnte, dem sogenannten "Ablaufen". Die die Keilsegmente beaufschlagende Feder durchdringt mit jedem ihrer beiden Endfinger jeweils eine fensterartige Öffnung des Sperrelementes, wobei die zwei Öffnungen im Querschnitt gegenüber dem Federdrahtdurchmesser deutlich größer sind. Die Feder durchdringt das Sperrelement also insgesamt zweimal. Das Sperrelement verhindert das Ablaufen, indem es einerseits mittels der Ränder der Öffnungen und mittels der Endfinger der Feder die Keilsegmente festhält und andererseits mittels an ihm ausgebildeter Rastnasen mit einem der Beschlagteile zusammenwirkt, genauer gesagt mit der Kehrseite der Außenverzahnung des Zahnrades, welche sonst keine weitere Funktion hat. Die beiden Endfinger der Feder bewegen sich (in Umfangsrichtung) zusammen mit den beiden Keilsegmenten spiegelsymmetrisch, weswegen die zwei großen Öffnungen im Sperrelement notwendig sind, um alle Toleranzlagen abzudecken. Dies wiederum führt beim Lösen des Sperrelementes zu einem großen Leerweg in Umfangsrichtung.

Der Erfindung liegt die Aufgabe zu Grunde, einen Beschlag der eingangs genannten Art zu verbessern, insbesondere hinsichtlich der Ansteuerung des Sperrelementes. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem die Feder genau einmal das Sperrelement, und zwar an genau einer Öffnung, durchdringt, ist die Ansteuerung des Sperrelementes unabhängig von den toleranzbedingten Abstandsschwankungen (in Umfangsrichtung) der Keilsegmente, was in einem geringen Ansteuerweg (d.h. Betätigungsdrehwinkel) des Mitnehmers resultiert. Das Sperrelement sperrt den Exzenter, indem die Feder in Umfangsrichtung an einem der beiden Ränder (d.h. dem in der möglichen Drehrichtung liegenden Rand) der genau einen Öffnung anliegt. Der verbliebene Ansteuerweg ist maximal die in Umfangsrichtung auftretende Differenz zwischen der Abmessung der genau einen Öffnung und der Abmessung der Feder innerhalb der genau einen Öffnung. Jede Verringerung dieser Differenz gegenüber dem Stand der Technik ist daher eine Verbesserung, wobei jedoch wenigstens ein geringes Spiel für eine Beweglichkeit quer zur Umfangsrichtung vorhanden ist.

Die Öffnung ist vorzugsweise vollständig vom Material des Sperrelementes umschlossen. Der Weg zum Lösen des Sperrelementes mittels einer Relativbewegung von Feder und Sperrelement wird dadurch zur Verfügung gestellt, dass die Öffnung langlochförmig in radialer Richtung verlaufend im Sperrelement ausgebildet ist. In radialer Richtung erfolgen vorzugsweise auch der Eingriff der Sperrnasen in die Verzahnung, die Bewegung zum Lösen des Sperrelementes aus der Verzahnung mittels des Mitnehmers und eine Vorspannung des Sperrelementes, welches vorzugsweise als Sperrfeder aus Federstahl ausgebildet ist. Um die Drehbewegung des Mitnehmers in eine solche Bewegung des Sperrelementes umzusetzen, weist der am Sperrelement vorgesehene Stützfinger oder der Mitnehmer ein Anlaufschräge auf, die schräg zur radialen Richtung und zur Umfangsrichtung verläuft.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann, und trotzdem ausreichend große Verbindungsbereiche am zweiten Beschlagteil zur Montage des Beschlags zur Verfügung stehen. Das Zahnrad am radial äußeren Rand des zweiten Beschlagteils wird dann vorzugsweise von einem am ersten Beschlagteil befestigten Umklammerungsring übergriffen. Die im wesentlichen flache Form des Umklammerungsrings benötigt gegenüber der bekannten L-förmig profilierten Ausbildung weniger Material, was zu einer Einsparung von Gewicht und Kosten führt.

Die Ausbildung der - gegenüber dem Zahnkranz separaten - Verzahnung an dem den Exzenter aufnehmenden ersten Beschlagteil erlaubt die Übernahme des Konzepts, den Exzenter im nicht-angetriebenen Zustand des Beschlags zu sperren. Beim Prägen des Zahnkranzes entsteht auf dessen Kehrseite eine nach außen weisende Gegenverzahnung. Die vom Zahnkranz und dessen Kehrseite separate Ausbildung der Verzahnung ermöglicht eine bauraumsparende Anpassung der Geometrien von Sperrelement und Verzahnung.

Das erfindungsgemäße Sperrelement weist vorzugsweise eine Ringform auf, beispielsweise aus zwei Bögen, und sitzt vorzugsweise auf einem Überstand einer Gleitlagerbuchse, mittels welcher das erste Beschlagteil den Exzenter aufnimmt. Entsprechende Federarme sorgen für einen Kraftschluss. Optional können Führungsabschnitte vorgesehen sein, welche die Lagerung auf dem Überstand verbessern. In Abhängigkeit von der genauen Lagerung des Exzenters kann das Sperrelement auch auf einem Kragen oder auf einer Nabe des Mitnehmers oder einem Mitnehmersegment gelagert sein.

Eine einstückige Ausbildung des Sperrelementes aus Federstahl ermöglicht eine einfache Integration der Merkmale des Sperrelementes. Zum Zusammenwirken mit der Verzahnung des ersten Beschlagteils, welche vorzugsweise als Zahnkranz mit radial nach innen weisenden Zähnen ausgebildet ist, sind vorzugsweise Sperrnasen vorgesehen, die radial nach außen weisen. Zum Zusammenwirken mit dem Exzenter ist die genau ein Öffnung vorgesehen, welche von der Feder des vorzugsweise aus zwei Keilsegmenten bestehenden Exzenters durchdrungen wird. Zum Zusammenwirken mit dem Mitnehmer sind vorzugsweise Stützfinger vorgesehen, welche der Mitnehmer mittels Aussteuernocken beaufschlagen kann.

Gegenüber Lösungen, bei denen das Sperrelement mit Verzahnungen an der Gleitlagerbuchse (DE 10 2007 010 078 B4) oder an einem Kragen der von der Gleitlagerbuchse ausgekleideten Aufnahme zusammenwirkt, besteht vorliegend der Vorteil, dass ein größerer Radius der Verzahnung einen größeren Hebelarm für das Sperrmoment definiert.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

Das Sperrelement dient vorrangig dem Sperren des Beschlags unter dynamischen Belastungen. Der Grundanteil beim Sperren des Exzenterumlaufgetriebes wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die Keilsegmente, welche den Exzenter definieren, dienen sowohl dem Sperren als auch dem Antreiben der Abwälzbewegung von Zahnrad und Zahnkranz. Ein vorzugsweise zusätzlich vorgesehenes Sperrelement dient dem Sperren des Beschlags unter dynamischen Belastungen.

Die Erfindung ist vorzugsweise zur Neigungseinstellung der Lehne von Fahrzeugsitzen in Kraftfahrzeugen einsetzbar, kann aber auch für andere Einsatzzwecke verwendet werden.

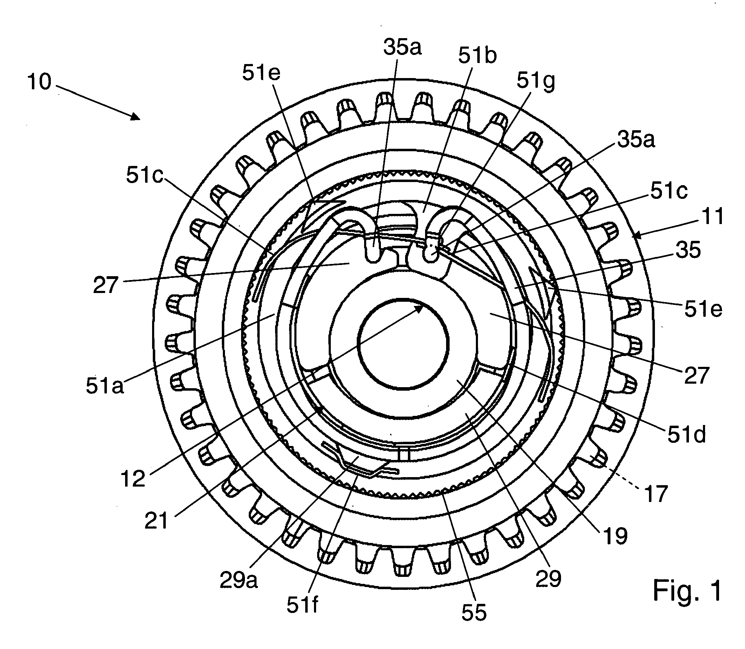

Im folgenden ist die Erfindung anhand eines in der Zeichnung dargestellten Ausführungsbeispiels näher erläutert. Es zeigen
- Fig. 1: eine Teilansicht des Beschlags ohne Nabe und Abdeckscheibe des Mitnehmers im nicht-angetriebenen Zustand,

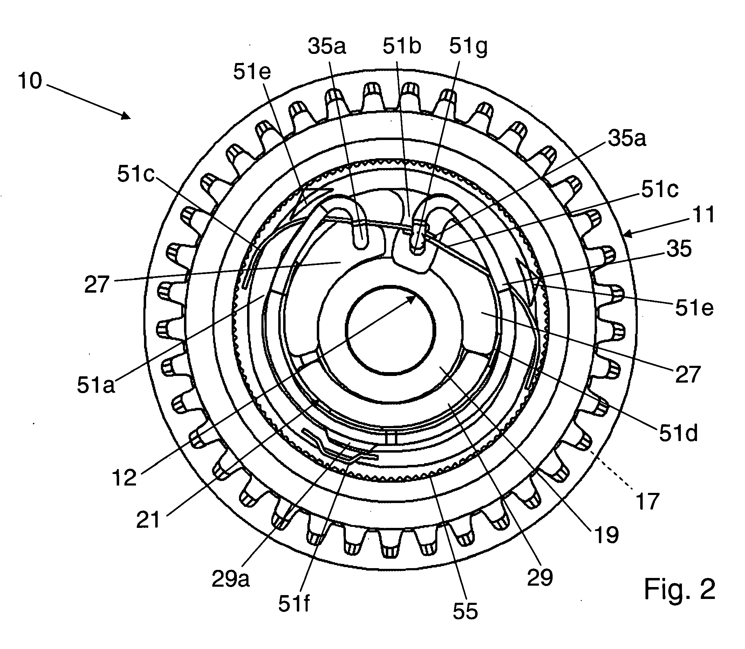

- Fig. 2: eine Fig. 1 entsprechende Teilansicht des Beschlags im angetriebenen Zustand,

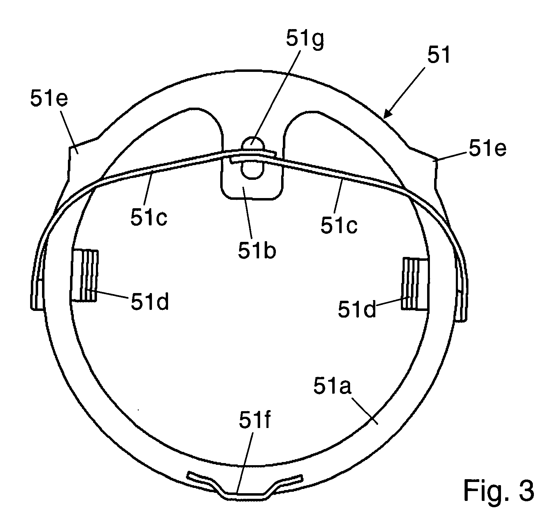

- Fig. 3: eine Ansicht der als Sperrelement dienenden Sperrfeder,

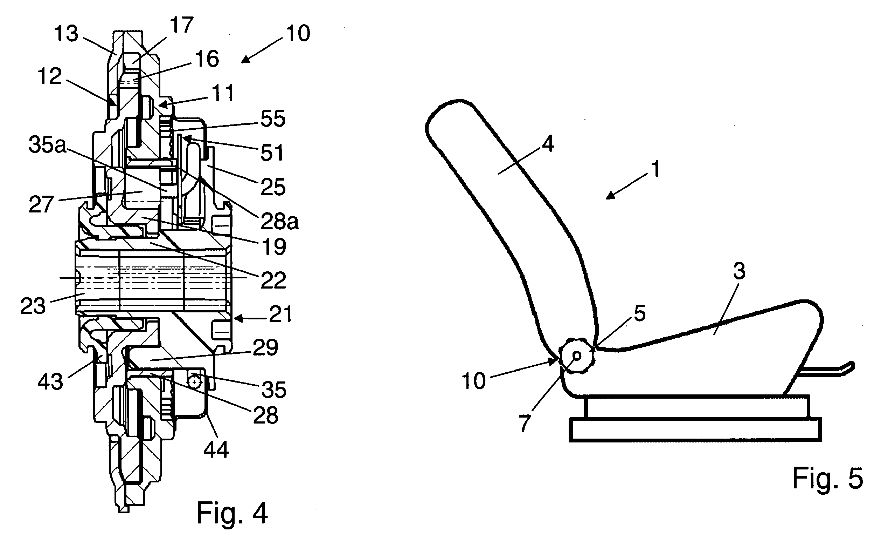

- Fig. 4: einen Axialschnitt durch den Beschlag, und
- Fig. 5: eine schematische Darstellung eines Fahrzeugsitzes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der

US 6,799,806 B2 beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen (d.h. in dessen radial äußerem Randbereich), ohne die Relativdrehung der beiden Beschlagteile 11 und 12 zu behindern, d.h. der Umklammerungsring 13 (welcher eine im wesentlichen flache Form aufweisen kann) und das mit ihm fest verbundene Beschlagteil 11 oder 12 umklammern das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist noch als Sperrelement eine Sperrfeder 51 vorgesehen, der prinzipielle Funktion beispielsweise in der DE 195 48 809 C1 offenbart ist. Die Sperrfeder 51 ist vorliegend einstückig aus Federstahl ausgebildet.

Die im wesentlichen ringförmige Sperrfeder 51 weist einen ringförmigen Grundkörper 51a auf, welcher in einer Ebene parallel zum ersten Beschlagteil 11 angeordnet ist. An einer Stelle in Umfangsrichtung weist eine Lasche 51b vom Grundkörper 51 a aus radial nach innen. Zwei Federarme 51c sind mit ihren freien Enden einander zugewandt, vorzugsweise aneinander anliegend, und mit den von einander abgewandten Enden am Grundkörper 51 a angeformt, vorzugsweise radial gegenüberliegend und in Umfangsrichtung um näherungsweise 90° zur Lasche 51b versetzt. Während der Grundkörper 51a innerhalb der besagten Ebene in Umfangs- und in radialer Richtung liegt, erstrecken sich die beiden Federarme 51c (auch) in axialer Richtung zwischen den besagten beiden Ebenen. Vom Grundkörper 51a stehen optional zwei in Umfangsrichtung verlaufende, in radialer Richtung vorzugsweise stufenförmig gebogene Führungabschnitte 51d axial ab, die vorzugsweise im Bereich der Federarme 51c und radial gegenüberliegend vorgesehen sind. Zwei Sperrnasen 51e stehen vom Grundkörper 51a radial (nach außen) ab, welche bezüglich der Umfangsrichtung in der die Lasche 51b aufweisenden Hälfte der Sperrfeder 51 angeordnet sind. Der Lasche 51b gegenüberliegend, aus in der den Sperrnasen 51e gegenüberliegenden Hälfte, weist die Sperrfeder 51 einen Stützfinger 51f auf, welcher vom Grundkörper 51a axial absteht, vorzugsweise ebenfalls angeformt ist. Schließlich ist in der Lasche 51b eine langlochförmige Öffnung 51g ausgebildet, welche sich in radialer Richtung erstreckt, d.h. die beiden Längsränder der langlochförmigen Öffnung 51g verlaufen (wenigstens näherungsweise) in radialer Richtung.

Die Gleitlagerbuchse 28 weist vorliegend eine größere axiale Abmessung als die von ihr ausgekleidete Aufnahme auf, so dass sie in axialer Richtung über das ihr zugeordnete Beschlagteil, also vorliegend das erste Beschlagteil 11, übersteht, was einen Überstand 28a definiert. Die Sperrfeder 51 stützt sich an dem Überstand 28a der Gleitlagerbuchse 28 ab, indem die Führungsabschnitte 51d am Überstand 28a der Gleitlagerbuchse 28 anliegen. Kummulativ oder alternativ liegen die Führungsabschnitte 51d an einem axial abstehenden Rand der von der Gleitlagerbuchse 28 ausgekleideten Aufnahme an und lagern dadurch die Sperrfeder 51.

Mit einem der beiden Endfinger 35a durchdringt die Feder 35 genau einmal die genau eine langlochförmige Öffnung 51g. Die Abmessung der langlochförmigen Öffnung 51g in Umfangsrichtung, d.h. der Abstand der beiden Längsränder voneinander, und die Abmessung dieses genau einen Endfingers 35a in Umfangsrichtung, d.h. der Durchmesser des Federdrahtes, aus dem die Feder 35 besteht, weisen eine geringe Differenz auf, beispielsweise maximal 3 mm, vorzugsweise maximal 0,5 mm, höchst vorzugsweise maximal 0,2 mm. Mit diesem Spiel wird eine Bewegung des Endfingers 35a in radialer Richtung der langlochförmigen Öffnung 51g ermöglicht. Indem der Endfinger 35a in Anlage an einen Längsrand der langlochförmigen Öffnung 51g kommt, liegt die Feder 35 an der Sperrfeder 51 bzw. deren Lasche 51b an. Die vorgespannten Federarme 51c stützen sich so am Endfinger 35a ab, dass sich dieser am radial inneren Ende der langlochförmigen Öffnung 51g befindet.

Die Sperrfeder 51 wirkt mit einer zur Gleitlagerbuchse 28 konzentrischen und radial außerhalb derselben angeordneten Verzahnung 55 am ersten Beschlagteil 11 zusammen, deren Zähne radial nach innen weisen, d.h. die als weiterer Zahnkranz ausgebildet ist, vorliegend auf der Kehrseite des Zahnkranzes 17 und konzentrisch zu diesem. Die Sperrfeder 51 sperrt die Feder 35 und die Keilsegmente 27 im nichtangetriebenen Zustand des Beschlags 10, indem die Sperrnasen 51e - aufgrund der vorgespannten und am Endfinger 35a abgestützten Federarme 51c - in Eingriff mit der Verzahnung 55 stehen. Eine Bewegung der Keilsegmente 27 wird durch die beschriebene, in Umfangsrichtung wirksame Anlage des einen Endfingers 35a der Feder 35 an die Sperrfeder 51 verhindert, da die Endfinger 35a der Feder 35a in die Keilsegmente 27 gesteckt sind. Da die Abmessung der langlochförmigen Öffnung 51g in Umfangsrichtung nur geringfügig größer als die Abmessung des Endfingers 35a in Umfangsrichtung ist, entfaltet die Sperrfeder 51 ihre Sperrwirkung sofort, wenn der Endfinger 35a des nächstgelegenen Keilsegmentes 27 bereits an einem Längsrand der langlochförmigen Öffnung 51g anliegt, und ansonsten spätestens bei minimalster Bewegung (Durchfahren des durch die Differenz der Abmessungen vorgegebenen Weges) des nächstgelegenen Keilsegmentes 27, d.h. bei einer minimalen Drehung des Exzenters.

Am Mitnehmer 21, vorzugsweise am Mitnehmersegment 29 oder an der Abdeckscheibe 25 oder im Übergangsbereich zwischen den beiden, ist ein Aussteuernocken 29a ausgebildet. Der Stützfinger 51f weist in Umfangsrichtung einen radial gestuften Verlauf auf, indem ein Mittelabschnitt radial außen angeordnet ist, zwei daran anschließenden Anlaufschrägen radial schräg nach innen verlaufen und zwei wiederum an diese anschließende Endabschnitte radial weiter innen angeordnet sind. Im nichtangetriebenen Zustand der Sperrfeder 51 befindet sich der Aussteuernocken 29a im Bereich des Mittelabschnitts zwischen den Anlaufschrägen.

Die Sperrfeder 51 wird durch den angetriebenen Mitnehmer 21 gelöst, indem dieser mittels des Aussteuernockens 29a in Anlage an den Stützfinger 51f gelangt, genauer gesagt an die der Drehrichtung entsprechende Anlaufschräge. Mit der weiteren Drehung des Mitnehmers 21 bewegt sich der Aussteuernocken 29a relativ zum Stützfinger 51f so, dass er an der Anlaufschräge entlang gleitet (bis zum zugeordneten Endabschnitt). Aufgrund des radial schrägen Verlaufs bewegt sich der Stützfinger 51f in radialer Richtung nach außen, also die Lasche 51b auf der radial gegenüberliegenden Seite der Sperrfeder 51 radial nach innen, geführt vom umschlossenen Endfinger 35a der Feder 35 in der langlochförmigen Öffnung 51g. Zugleich werden die Sperrnasen 51e aus der Verzahnung 55 gezogen, bis sie vollständig außer Eingriff sind. Zeitgleich oder danach kommt das Mitnehmersegment 29 in Anlage an das nacheilende der beiden Keilsegmente 27, worauf der Exzenter beginnt, sich zu drehen (umzulaufen). Wird der Mitnehmer 21 gestoppt, so bringen die Federarme 51c die Sperrnasen 51e wieder in Eingriff mit der Verzahnung 55, so dass die Keilsegmente 27 wieder gesperrt sind.

### Bezugszeichenliste

- 1: Fahrzeug sitz
- 3: Sitzteil
- 4: Lehne
- 5: Handrad
- 7: Antriebswelle
- 10: Beschlag
- 11: erstes Beschlagteil
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 28a: Überstand
- 29: Mitnehmersegment
- 29a: Aussteuernocken
- 35: Feder
- 35a: Endfinger
- 43: Sicherungsring
- 44: Dichtring
- 51: Sperrfeder, Sperrelement
- 51 a: Grundkörper
- 51b: Lasche
- 51c: Federarm
- 51d: Führungsabschnitt
- 51e: Sperrnase
- 51f: Stützfinger
- 51g: (langlochförmige) Öffnung
- 55: Verzahnung

## Patentansprüche

1. Beschlag für einen Fahrzeugsitz, insbesondere für einen Kraftfahrzeugsitz, mit
a) einem ersten Beschlagteil (11) und einem zweiten Beschlagteil (12), welche miteinander in Getriebeverbindung stehen mittels eines Zahnrades (16) und eines Zahnkranzes (17), die miteinander kämmen,
b) einem von einem Mitnehmer (21) angetriebenen, in Umfang srichtung umlaufenden Exzenter (27, 27) zum Antrieb einer relativen Abwälzbewegung von Zahnrad (16) und Zahnkranz (17), wobei das erste Beschlagteil (11) den Exzenter (27, 27) aufnimmt, welcher sich am zweiten Beschlagteil (12) abstützt, wobei zwei von einer Feder (35) beaufschlagte Keilsegmente (27) den Exzenter (27, 27) definieren,
c) einem Sperrelement (51), welches den Exzenter (27) im nicht-angetriebenen Zustand des Beschlags (10) durch Zusammenwirken wenigstens einer Sperrnase (51e) des Sperrelementes (51) mit einer am ersten Beschlagteil (11) ausgebildeten Verzahnung (55) sperrt und welches den Exzenter (27, 27) bei Antrieb durch den Mitnehmer (21) freigibt, wobei das Sperrelement (51) wenigstens eine von der Feder (35) durchdrungene Öffnung (51g) aufweist, **dadurch gekennzeichnet, dass**
d) die Feder (35) das Sperrelement (51) an genau einer Öffnung (51g) durchdringt,

2. Beschlag nach Anspruch 1, **dadurch gekennzeichnet, dass** die Differenz zwischen der Abmessung der genau einen Öffnung (51g) in Umfangsrichtung und der Abmessung der Feder (35) in Umfangsrichtung innerhalb der genau einen Öffnung (51g) maximal 3 mm beträgt, vorzugsweise maximal 0,5 mm, höchst vorzugsweise maximal 0,2 mm.

3. Beschlag nach Anspruch 1 oder 2, **dadurch gekennzeichnet, dass** die Öffnung (51g) langlochförmig in radialer Richtung verlaufend im Sperrelement (51) ausgebildet ist.

4. Beschlag nach Anspruch 3, **dadurch gekennzeichnet, dass** das Sperrelement (51) wenigstens einen Federarm (51c) aufweist, welcher sich an der Feder (35) abstützt und einerseits diese an ein Ende der langlochförmigen Öffnung (51g) und andererseits die wenigstens eine Sperrnase (51e) mit der Verzahnung (55) in Eingriff bringt.

5. Beschlag nach einem der vorhergehenden Ansprüche, **dadurch gekennzeichnet, dass** das Sperrelement (51) einen ringförmigen Grundkörper (51a), insbesondere aus Federstahl, mit einer die Öffnung (51g) aufweisenden Lasche (51b) und/oder mit wenigstens einem Führungsabschnitt (51d) zur Lagerung am ersten Beschlagteil (11) aufweist.

6. Beschlag nach einem der vorhergehenden Ansprüche, **dadurch gekennzeichnet, dass** der Mitnehmer (21) wenigstens einen Aussteuernocken (29a) aufweist, welcher bei Antrieb des Mitnehmers (21) mit einem Stützfinger (51f) der Sperrelementes (51) zusammenwirkt und das Sperrelement (51) von der Verzahnung (55) löst.

7. Beschlag nach Anspruch 6, **dadurch gekennzeichnet, dass** bei Antrieb des Mitnehmers (21) der vorzugsweise eine Anlaufschräge aufweisende Stützfinger (51f) sich in radialer Richtung bewegt und die wenigstens eine, radial in entgegengesetzter Richtung abstehende Sperrnase (51e) von der Verzahnung (21) löst.

8. Beschlag nach einem der vorhergehenden Ansprüche, **dadurch gekennzeichnet, dass** der Zahnkranz (17) an dem die Verzahnung (55) aufweisenden ersten Beschlagteil (11) und das Zahnrad (16) am zweiten Beschlagteil (12) ausgebildet ist, wobei die Verzahnung (55) insbesondere auf der vom Zahnkranz (17) abgekehrten Seite des ersten Beschlagteils (11) ausgebildet ist.

9. Beschlag nach Anspruch 8, **dadurch gekennzeichnet, dass** das erste Beschlagteil (11) den Exzenter (27, 27) mittels einer zum Zahnkranz (17) konzentrischen Gleitlagerbuchse (28) aufnimmt, welche mit einem Überstand (28a) axial über die von ihr ausgekleidete Aufnahme des ersten Beschlagteils (11) übersteht, wobei das Sperrelement (51) mittels eines Grundkörpers (51a) und/oder wenigstens eines Führungsabschnittes (51d) und/oder wenigstens eines Federarms (51c) am Überstand (28a) der Gleitlagerbuchse (28) abgestützt ist.

10. Beschlag nach einem der vorhergehenden Ansprüche, **dadurch gekennzeichnet, dass** ein Umklammerungsring (13) das erste Beschlagteil (11) und das zweite Beschlagteil (12) axial zusammenhält unter Bildung einer scheibenförmigen Einheit.

11. Fahrzeugsitz, insbesondere Kraftfahrzeugsitz, mit wenigstens einem Beschlag nach einem der vorhergehenden Ansprüche, einem Sitzteil (3), welches mit einem der beiden Beschlagteile (11, 12) verbunden ist, und einer Lehne (4), welche mit dem anderen den beiden Beschlagteile (11, 12) verbunden ist.

## Claims

1. Fitting for a vehicle seat, in particular for a motor vehicle seat, having
a) a first fitting part (11) and a second fitting part (12) which are in geared connection by means of a toothed wheel (16) and a toothed ring (17), which mesh with each other,
b) an eccentric (27, 27) rotating in a circumferential direction, driven by a driver (21), for driving a relative rolling movement of the toothed wheel (16) and the toothed ring (17), wherein the first fitting part (11) receives the eccentric (27, 27) which is supported on the second fitting part (12), wherein two wedge segments (27) upon which a spring (35) acts, define the eccentric (27, 27),
c) a retaining element (51) which retains the eccentric (27) in the non-driven state of the fitting (10) by cooperating of at least one retaining lug (51e) of the retaining element (51) with a toothing (55) arranged on the first fitting part (11), and which releases the eccentric (27, 27), when it is driven by the driver (21), wherein the retaining element (51) hat at least one opening (51g) which is penetrated by the spring (35), **characterized in that**
d) the spring (35) penetrates the retaining element (51) at exactly one opening (51g).

2. The fitting according to Claim 1, **characterized in that** the difference between the dimension of the exactly one opening (51g) in the circumferential direction and the dimension of the spring (35) in the circumferential direction within the exactly one opening (51g) amounts to a maximum of 3 mm, preferably to a maximum of 0.5 mm, most preferably to a maximum of 0.2 mm.

3. The fitting according to Claim 1 or 2, **characterized in that** the opening (51g) is configured to be oblong-hole shaped, extending in the radial direction in the retaining element (51).

4. The fitting according to Claim 3, **characterized in that** the retaining element (51) has at least one spring arm (51c) which is supported on the spring (35) and makes engage, on the one hand, the latter with one end of the oblong-hole-shaped opening (51g) and, on the other hand, the at least one retaining lug (51e) with the toothing (55).

5. The fitting according to one of the preceding claims, **characterized in that** the retaining element (51) has an annular basic body (51a), in particular composed of spring steel, having a tab (51b) which is provided with the opening (51g) and/or at least one guide section (51d) for bearing on the first fitting part (11).

6. The fitting according to one of the preceding claims, **characterized in that** the driver (21) has at least one control cam (29a) which, when the driver (21) is driven, cooperates with one support finger (51f) of the retaining element (51) and releases the retaining element (51) from the toothing (55).

7. The fitting according to Claim 6, **characterized in that**, when the driver (21) is driven, the support finger (51f) which preferably is provided with a bevel moves in the radial direction and releases the at least one retaining lug (51e), which protrudes radially in the opposed direction, from the toothing (21).

8. The fitting according to one of the preceding claims, **characterized in that** the toothed ring (17) is configured on the first fitting part (11) having the toothing (55), and the toothed wheel (16) is configured on the second fitting part (12), wherein the toothing (55) is configured in particular on the side of the first fitting part (11) which is faced away from the toothed ring (17).

9. The fitting according to Claim 8, **characterized in that** the first fitting part (11) receives the eccentric (27, 27) by means of a slide bearing bush (28) which is concentric to the toothed ring (17), such slide bearing bush protruding axially with a projection over the receptacle of the first fitting part (11) which is lined by it, wherein the retaining element (51) is supported by means of a basic body (51a) and/or at least one guide section (51d) and/or at least one spring arm (51c) on the projection (28a) of the slide bearing bush (28).

10. The fitting according to one of the preceding claims, **characterized in that** an enclosing ring (13) axially holds together the first fitting part (11) and the second fitting part (12), forming a disc-shaped unit.

11. Vehicle seat, in particular a motor vehicle seat having at least one fitting according to one of the preceding claims, a seat part (3) which is connected with one of the two fitting parts (11, 12), and a backrest (4) which is connected with the other one of the two fitting parts (11, 12).

## Revendications

1. Ferrure pour un siège de véhicule, en particulier pour un siège de véhicule automobile, comprenant
a) une première partie de ferrure (11) et une deuxième partie de ferrure (12) qui sont en liaison de transmission l'une avec l'autre au moyen d'une roue dentée (16) et d'une couronne dentée (17) qui s'engrènent l'une dans l'autre,
b) un excentrique (27, 27) entraîné par un dispositif d'entraînement (21), en circulation dans la direction périphérique, pour l'entraînement d'un mouvement de roulement relatif de la roue dentée (16) et de la couronne dentée (17), la première partie de ferrure (11) recevant l'excentrique (27, 27) qui s'appuie sur la deuxième partie de ferrure (12), deux segments de clavette (27) sollicités par un ressort (35) définissant l'excentrique (27, 27),
c) un élément de blocage (51) qui bloque l'excentrique (27) dans l'état non entraîné de la ferrure (10) par coopération d'au moins un ergot de blocage (51e) de l'élément de blocage (51) avec une denture (55) réalisée sur la première partie de ferrure (11) et qui libère l'excentrique (27, 27) lors de l'entraînement par le dispositif d'entraînement (21), l'élément de blocage (51) présentant au moins une ouverture (51g) traversée par le ressort (35), **caractérisée en ce que**
d) le ressort (35) traverse l'élément de blocage (51) exactement au niveau d'une ouverture (51g).

2. Ferrure selon la revendication 1, **caractérisée en ce que** la différence entre la dimension de l'exactement une ouverture (51g) dans la direction périphérique et la dimension du ressort (35) dans la direction périphérique à l'intérieur de l'exactement une ouverture (51g) vaut au maximum 3 mm, de préférence au maximum 0,5 mm, plus préférablement au maximum 0,2 mm.

3. Ferrure selon la revendication 1 ou 2, **caractérisée en ce que** l'ouverture (51g) est réalisée de manière à s'étendre sous forme de trou oblong dans la direction radiale dans l'élément de blocage (51).

4. Ferrure selon la revendication 3, **caractérisée en ce que** l'élément de blocage (51) présente au moins un bras de ressort (51c) qui s'appuie contre le ressort (35) et qui d'une part amène celui-ci en prise avec une extrémité de l'ouverture en forme de trou oblong (51g) et d'autre part amène l'au moins un ergot de blocage (51e) en prise avec la denture (55).

5. Ferrure selon l'une quelconque des revendications précédentes, **caractérisée en ce que** l'élément de blocage (51) présente un corps de base de forme annulaire (51a), en particulier en acier à ressort, avec une patte (51b) présentant l'ouverture (51g) et/ou avec au moins une portion de guidage (51d) pour le support sur la première partie de ferrure (11).

6. Ferrure selon l'une quelconque des revendications précédentes, **caractérisée en ce que** le dispositif d'entraînement (21) présente au moins une came de réglage (29a) qui, lors de l'entraînement du dispositif d'entraînement (21), coopère avec un doigt de support (51f) de l'élément de blocage (51) et libère l'élément de blocage (51) de la denture (55).

7. Ferrure selon la revendication 6, **caractérisée en ce que** lors de l'entraînement du dispositif d'entraînement (21) le doigt de support (51f) présentant de préférence un biseau de montée se déplace dans la direction radiale et libère de la denture (21) l'au moins un ergot de blocage (51e) faisant saillie radialement dans la direction opposée.

8. Ferrure selon l'une quelconque des revendications précédentes, **caractérisée en ce que** la couronne dentée (17) est réalisée au niveau de la première partie de ferrure (11) présentant la denture (55) et la roue dentée (16) est réalisée au niveau de la deuxième partie de ferrure (12), la denture (55) étant notamment réalisée sur le côté de la première partie de ferrure (11) opposé à la couronne dentée (17).

9. Ferrure selon la revendication 8, **caractérisée en ce que** la première partie de ferrure (11) reçoit l'excentrique (27, 27) au moyen d'une douille de palier lisse (28) concentrique à la couronne dentée (17) qui dépasse avec un dépassement (28a) axialement au-delà du logement de la première partie de ferrure (11) recouvert par celle-ci, l'élément de blocage (51) étant supporté au moyen d'un corps de base (51a) et/ou d'au moins une portion de guidage (51d) et/ou d'au moins un bras de ressort (51c) sur le dépassement (28a) de la douille de palier lisse (28).

10. Ferrure selon l'une quelconque des revendications précédentes, **caractérisée en ce qu'**une bague de serrage (13) retient axialement la première partie de ferrure (11) et la deuxième partie de ferrure (12) en formant une unité en forme de disque.

11. Siège de véhicule, en particulier siège de véhicule automobile, comprenant au moins une ferrure selon l'une quelconque des revendications précédentes, une partie de siège (3), qui est connectée à l'une des deux parties de ferrure (11, 12), et un dossier (4) qui est connecté à l'autre des deux parties de ferrure (11, 12).
